# EUROPÄISCHE PATENTSCHRIFT

(11) **EP 1 690 789 B1**
(45) Veröffentlichungstag und Bekanntmachung des Hinweises auf die Patenterteilung: **21.09.2011**
(21) Anmeldenummer: 06002053.4
(22) Anmeldetag: 01.02.2006
(51) Int. Cl.: B64D 11/02, E03F 1/00

(54) **Flugzeug mit Grauwasser-Nutzungssystem**
Aircraft with system for using the grey water
Aéronef avec système pour l'utilisation des eaux usées

(30) Priorität: 10.02.2005 DE 102005006136; 10.02.2005 US 651674 P
(43) Veröffentlichungstag der Anmeldung: 16.08.2006
(73) Patentinhaber: Airbus Operations GmbH, 21129 Hamburg (DE)
(72) Erfinder: Hoffjann, Claus, 21147 Hamburg (DE); Heinrich, Hans-Jürgen, 22609 Hamburg (DE); Tutaß, Andreas, 25524 Itzehoe (DE)
(74) Vertreter: Dilg, Andreas

(56) Entgegenhaltungen:
- EP-A- 0 530 859
- WO-A-01/17911
- DE-A1- 4 123 803
- DE-A1- 10 229 799
- DE-A1- 19 939 188

## Beschreibung

Die vorliegende Erfindung betrifft Grauwassemutzung für Flugzeuge. Insbesondere betrifft die vorliegende Erfindung ein Grauwasser-Nutzungssystem für ein Luftfahrzeug, ein Luftfahrzeug umfassend ein Grauwasser-Nutzungssystem und die Verwendung eines entsprechenden Grauwasser-Nutzungssystems in einem Luftfahrzeug.

In heutigen Verkehrsflugzeugen werden Vakuum-Toilettensysteme verwendet, bei denen der Fäkalientransport aus der WC-Schüssel in einen Abwassertank durch den Luftstrom, der durch den Druckunterschied zwischen Fäkalientank und Kabine hervorgerufen wird, erfolgt. Zur Unterstützung dieses Transportes und zur Reinigung der WC-Schüssel wird in diese zu jedem Spülvorgang eine geringe Menge Wasser über einen Sprühring eingesprüht. Das hierzu verwendete Wasser ist Frischwasser, welches aus den Trinkwassertanks an Bord stammt, und eigens zu diesem Zweck zusätzlich mitgeführt werden muss.

Weiterhin werden Grauwassersysteme verwendet, die das gebrauchte Wasser aus Handwaschbecken, Bordküchen-Waschbecken und zur Frachtraumdrainage über sog. Drainmasts, also beheizte Auslaufstutzen an der Unterseite des Rumpfes, nach außen leiten. Diese Drainmasts tragen zur Erhöhung des Luftwiderstands bei.

DE 102 29 799 A1 zeigt ein Verfahren zur Aufbereitung und Wiederverwendung von Grauwasser von Toiletten in Vakuumsystemen. Dabei wird mit einer anodischen Oxidation Grauwasser aufbereitet, nachdem es gefiltert wurde. Weiterhin ist eine Zuführung des aufbereiteten Grauwassers zu einer Toilettenspülung gezeigt.

EP 0 530 859 A2 zeigt ein Vakuum Toiletten System für ein Fahrzeug, bei welchem Grauwasser aus einem Handwaschbecken gesammelt und anschließend an eine Toilettenspülung gegeben wird.

Es ist eine Aufgabe der vorliegenden Erfindung, eine verbesserte Nutzung von Grauwasser in einem Luftfahrzeug bereitzustellen.

Gemäß einem Ausführungsbeispiel der vorliegenden Erfindung wird die obige Aufgabe mittels eines Grauwasser-Nutzungssystems für ein Luftfahrzeug gelöst, das

Grauwasser-Nutzungssystem umfassend eine Grauwasseraufreinigungseinrichtung, einen Abwassersammeltank und ein Vakuum-System, wobei die

Grauwasseraufreinigungseinrichtung zur Aufreinigung von Grauwasser zu erstem Klarwasser ausgeführt ist, welches daraufhin zur Spülung einer Toilette verwendbar ist, und wobei das Vakuum-System zum Sammeln von Abwasser in dem Abwassersammeltank ausgeführt ist.

Durch die Aufreinigung von Grauwasser innerhalb dem Luftfahrzeug, welches dann nachfolgend zur Toilettenspülung verwendet werden kann, verringert sich die mitzuführende Frischwassermenge erheblich. Dies fühlt zu einer signifikanten Gewichtseinsparung.

Weiterhin können durch die erfindungsgemäße Grauwassernutzung Grauwasserleitungen eingespart werden. Aufgrund der Aufreinigung und Weiterverwendung des Grauwassers innerhalb des Luftfahrzeuges kann der sonst übliche Drainmast entfallen, was nicht zuletzt zu einer verbesserten Aerodynamik und einer Verminderung des Luftwiderstandes führt. Weiterhin wird dadurch der Aufwand bei den Beheizungssystemen vermindert.

Gemäß einem weiteren Ausführungsbeispiel der vorliegenden Erfindung enthält das Abwasser erstes Spülwasser der Toilette oder zweites Spülwasser aus einem Küchenbereich und das Grauwasser drittes Spülwasser aus einem Waschbecken.

Vorteilhaft wird somit stark verschmutztes Abwasser aus der Bordtoilette oder dem Küchenbereich im Abwassersammeltank gespeichert, wobei weniger stark verschmutztes Grauwasser aus einem (Hand)Waschbecken der Grauwasseraufreinigung zugeführt wird. In der Grauwasseraufreinigungseinrichtung wird das Grauwasser dann beispielsweise von Schmutzpartikeln, Trübung und Geruchsstoffen befreit und kann dann als Klarwasser beispielsweise der Bordtoilette zugeführt werden.

Gemäß einem weiteren Ausführungsbeispiel der vorliegenden Erfindung ist die Grauwasseraufreinigungseinrichtung mit dem Waschbecken und der Toilette derart verbunden, dass das dritte Spülwasser aus dem Waschbecken in der Grauwasseraufreinigungseinrichtung zu zweitem Klarwasser aufreinigbar ist und daraufhin der Toilette zuführbar ist.

Somit kann Spülwasser nach erfolgter Aufreinigung aus dem Handwaschbecken zur Spülung einer in der Nähe befindlichen Toilette verwendet werden, wodurch beispielsweise Rohrleitungen von einem (großen) Klarwassertank eingespart werden können.

Gemäß einem weiteren Ausführungsbeispiel der vorliegenden Erfindung umfasst die Grauwasseraufreinigungseinrichtung eine Elektroflotationsstufe und/oder eine Filtrationsstufe, wobei die Elektroflotationsstufe zur Reinigung des Grauwassers von flotierbaren Wasserinhaltsstoffen ausgeführt ist, und wobei die Filtrationsstufe zur Filtrierung des Grauwassers ausgeführt ist.

Durch die Anwendung des Prinzips der Elektroflotation zur Reinigung des Grauwassers kann eine schnelle, gründliche und effektive Trennung des Wassers von flotierbaren Wasserinhaltsstoffen erreicht werden. Durch die Filtrationsstufe ist das Grauwasser schnell und einfach von groben Verunreinigungen befreibar. Elektroflotation und Filtration können erfindungsgemäß alternativ oder miteinander kombiniert eingesetzt werden.

Gemäß einem weiteren Ausführungsbeispiel der vorliegenden Erfindung wird das zweite Spülwasser in einem ersten Sammelbehälter aufgefangen und durch eine Überlaufvorrichtung mit Schwimmerventil oder über ein Absaugventil am Boden des Sammelbehälters in das Vakuum-System entlassen.

Vorteilhafterweise wird dadurch ein Zwischenpuffer bereitgestellt, so dass beispielsweise das Vakuum-System weniger häufig eingesetzt werden muss.

Gemäß einem weiteren Ausführungsbeispiel der vorliegenden Erfindung ist eine separate Drainagevorrichtung zur Drainage eines Frachtraums des Luftfahrzeuges vorgesehen, wobei die Drainagevorrichtung aus in den Rumpf eingelassenen Drainageventilen besteht oder über einen zweiten Sammelbehälter an das Vakuum-System angeschlossen ist.

Somit können, beispielsweise auch während der Flugmission, aus der Fracht ausgelaufene Flüssigkeitsmengen vorteilhaft in die Abwassertanks entsorgt werden.

Gemäß einem weiteren Ausführungsbeispiel der vorliegenden Erfindung ist eine Klärschaumabsaugvorrichtung vorgesehen zur Absaugung eines Klärschaums aus der Grauwasseraufreinigungseinrichtung über das Vakuum-System oder einen ersten Überlauf, welcher an der Grauwasseraufreinigungseinrichtung angebracht ist.

Vorteilhafterweise ist hierdurch sichergestellt, dass der sich in der Grauwasseraufreinigungseinrichtung ansammelnde Klärschaum rechtzeitig entfernt wird, bevor er negativ auf das Wasser in der Grauwasseraufreinigungseinrichtung einwirken kann. Die Klärschaumabsaugung kann beispielsweise über ein Ventil erfolgen, welches die Aufreinigungsstufe mit dem Vakuum-System verbindet, wobei dieses Ventil beispielsweise automatisch angesteuert wird und diese automatische Ansteuerung in bestimmten Zeitintervallen erfolgt, auf Basis eines vorgegebenen Zeittakts oder auf Basis einer Messung der Klärschaumschicht.

Durch den ersten Überlauf wird vorteilhaft ein Überlaufen der Grauwasseraufreinigungseinrichtung verhindert. Hierfür kann beispielsweise der Überlauf mit einem Schwimmventil versehen sein, welches eine Verbindung zwischen Aufreinigungsbehälter und Vakuum-System darstellt, und welches bei Erreichen eines Füllmaximums durch den auftreibenden Schwimmer geöffnet wird, wobei die überschüssige Flüssigkeit durch das Vakuum-System abgesaugt wird.

Gemäß einem weiteren Ausführungsbeispiel der vorliegenden Erfindung wird das erste oder zweite Klarwasser in einem Zwischenbehälter gesammelt, wobei der Zwischenbehälter mit einem zweiten Überlauf versehen ist.

Beispielsweise kann der zweite Überlauf mit einem zweiten Schwimmerventil versehen sein, welches eine Verbindung zwischen dem Zwischenbehälter und dem Vakuum-System darstellt und welches bei Erreichen eines Füllmaximums durch den auftreibenden zweiten Schwimmer geöffnet wird, wobei die überschüssige Flüssigkeit durch das Vakuum-System abgesaugt wird.

Gemäß einem weiteren Ausführungsbeispiel der vorliegenden Erfindung ist eine erste Drainagevorrichtung oder eine zweite Drainagevorrichtung vorgesehen, wobei die Grauwasseraufreinigungseinrichtung mit der ersten Drainagevorrichtung drainierbar ist und
wobei der Zwischenbehälter mit der zweiten Drainagevorrichtung drainierbar ist.

Gemäß einem weiteren Ausführungsbeispiel der vorliegenden Erfindung ist eine Druckzylinderkombination vorgesehen, über welche Klarwasser aus dem Zwischenbehälter angesaugt und dann in einem weiteren Schritt in die Toilette über einen Sprühring abgegeben wird.

Die Druckzylinderkombination stellt eine effektive Vorrichtung zur Spülung der Bordtoilette mit Klarwasser, welches aus einem dafür vorgesehenen Speicherbehälter abgepumpt wird, bereit.

Gemäß einem weiteren Ausführungsbeispiel der vorliegenden Erfindung werden die bei der Aufreinigung durch Elektroflotation entstehenden freien Wasserstoffmoleküle innerhalb des Gehäuses der Grauwasseraufreinigungseinrichtung oxidiert, so dass Wasser entsteht.

Hierdurch wird eine Explosionsgefahr, welche durch die Entstehung von Wasserstoff gegeben ist, ganz erheblich reduziert oder gänzlich ausgeschlossen.

Gemäß einem weiteren Ausführungsbeispiel der vorliegenden Erfindung ist eine Zwangsbelüftung des Gehäuses der Grauwasseraufreinigungseinrichtung vorgesehen, durch welche Luftsauerstoff einleitbar ist, so dass freigesetzter Wasserstoff mit dem (externen) Luftsauerstoff zu Wasser umgesetzt werden kann.

Weiterhin kann eine elektronische Steuerung vorgesehen sein, durch welche das Grauwasser-Nutzungssystem automatisch gesteuert oder geregelt werden kann. Zur Erhöhung der Systemsicherheit sind die einzelnen Steuerungselemente redundant ausgeführt, so dass bei Fehlfunktion oder Ausfall eines der Elemente ein jeweils anderes Steuerungselement dessen Funktion übernehmen kann.

Weiterhin ist, entsprechend einem Ausführungsbeispiel, ein erster Wasser-Mangel im Klarwasserzwischentank über eine Sensorik detektierbar, so dass, beispielsweise über die elektronische Steuerung, ein darauffolgender Waschvorgang in einem Waschraum verlängert werden kann, bis dieser Wassermangel behoben ist.

Weiterhin können eine Grauwasservorlage und die Elektroflotationseinrichtung bodenseitig nach dem Prinzip der kommunizierenden Röhren miteinander verbunden sein. Die Elektroflotationseinrichtung und die Filtrationsstufe sind gemäß eines Ausführungsbeispiels oberflächenseitig nach dem Überlaufprinzip verbunden.

Um eine Anlagerung von Hydroxiden an den Elektroden der Elektroflotationsstufe zu verhindern, kann die an die Elektroden angelegte Gleichspannung periodisch umgepolt werden.

Weitere Aufgaben, Ausführungsformen und Vorteile der Erfindung ergeben sich aus den nebengeordneten Ansprüchen und den Unteransprüchen.

Im Folgenden wird die Erfindung anhand von Ausführungsbeispielen unter Bezugnahme auf die Zeichnungen näher beschrieben.

Fig. 1 zeigt eine schematische Darstellung eines Grauwasser-Nutzungssystems gemäß eines Ausführungsbeispiels der vorliegenden Erfindung.

Fig. 2 zeigt eine schematische Querschnittsdarstellung eines Flugzeugs mit einem Grauwasser-Nutzungssystem gemäß einem Ausführungsbeispiel der vorliegenden Erfindung.

In der folgenden Figurenbeschreibung werden für die gleichen oder ähnlichen Elemente die gleichen Bezugsziffern verwendet.

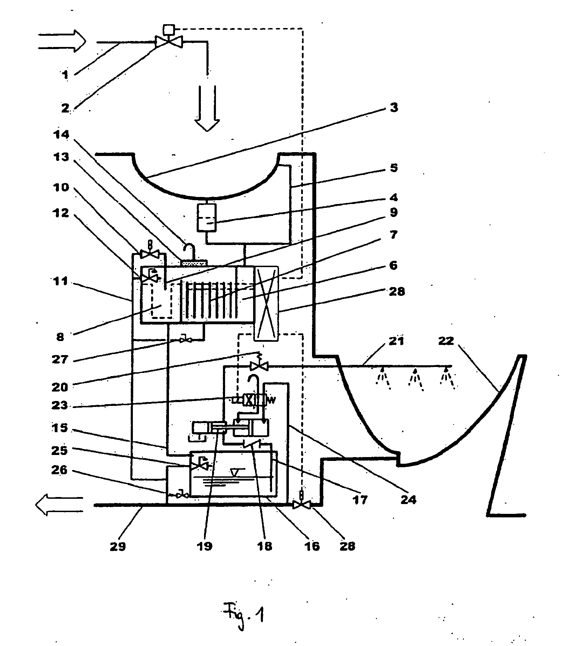

Fig. 1 zeigt eine schematische Darstellung eines Grauwasser-Nutzungssystems gemäß einem Ausführungsbeispiel der vorliegenden Erfindung. Wie Fig. 1 zu entnehmen ist, weist das Grauwasser-Nutzungssystem eine Grauwasseraufreinigungseinrichtung 7, 8, einen Abwassersammeltank 36 und ein Vakuum-System 29 auf.

Das über den Wasserhahn 2 aus dem Frischwassersystem 1 bei einem Reinigungsvorgang in das Waschbecken 3 gelangende und mit Schmutzpartikeln, organischen Stoffen sowie Seife oder Tensiden versetzte Wasser (Grauwasser) wird über ein Grobsieb 4 in den Vorlagebehälter 6 der Grauwasseraufreinigungseinrichtung 6, 7 geleitet.

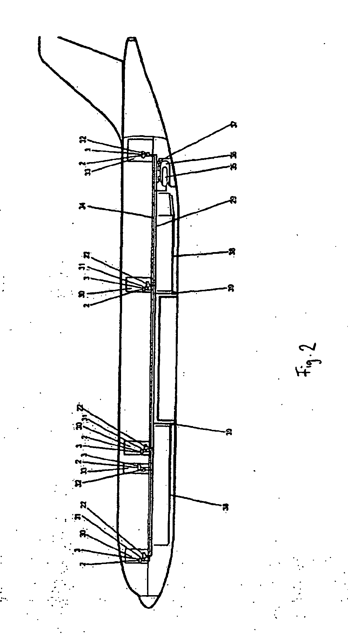

Das Luftfahrzeug ist mit einem Vakuum-System 29 zum Sammeln von Abwasser in mindestens einen Abwasser-Sammeltank 36 ausgestattet, wobei das Vakuum-System über den Sammeltank 36 mit einem Vakuum beaufschlagt wird, welches entweder über den Differenzdruck von Flugzeugkabinendruck zu niedrigem Außenluftdruck in Flughöhe dargestellt wird oder über den Differenzdruck von Flugzeugkabinendruck zu Behälterdruck im Abwassersammeltank 36, welcher über einen Vakuum-Generator 37 auf einen Innendruck gebracht wird, der unter dem Kabinendruck liegt (s. Fig. 2).

Bei dem so ausgestatteten Luftfahrzeug wird Trinkwasser aus mindestens einem Frischwassertank 35 (s. Fig. 2) oder über ein Wassergenerierungssystem, wie z. B. einem Brennstoffzellensystem (nicht dargestellt), zur Verfügung gestellt und an definierten Zapfstellen über Wasserhähne 2 an die Passagiere oder die Besatzung abgegeben. Vorteilhafterweise befinden sich unter diesen Zapfstellen zwei Auffangbecken in Form von Waschbecken 3, wobei diese Waschbecken vorzugsweise in den Küchenbereichen 33 (s.
Fig. 2) und den Waschräumen 30 installiert sind und wobei wenigstens ein Teil der Waschräume auch WCs 22 enthält, welche wiederum über Spülventil bzw. Absaugventil 28 und elektronische Kontrollbox 29 an das Vakuum-System angeschlossen sind. Bezugsziffer 5 bezeichnet den Waschbeckenüberlauf und Bezugsziffer 24 eine Vakuum-Steuerleitung.

Zusätzlich ist das Luftfahrzeug mit mindestens einer Grauwasseraufreinigungseinrichtung 6 bis 14 ausgestattet, die entweder zentral oder dezentral bei Vorhandensein mehrerer Grauwasseraufreinigungseinrichtungen 31 derart mit den in den Waschräumen 30 installierten Waschbecken 3, 4 und WCs 22 verbunden ist, dass das Wasser, welches in den Waschbecken aufgefangen wird, zu Klarwasser, d. h. frei von Schmutzpartikeln, Trübung und Geruchsstoffen, aufgereinigt werden kann und der WC-Spülung 16 bis 21 zugeführt werden kann.

Vom Vorlagebehälter 6 fließt das verschmutzte Wasser nach dem Prinzip der kommunizierenden Röhren in die Aufreinigung 7, bei der es sich um eine Elektroflotationsstufe handelt.

Vorlagebehälter 6 und Aufreinigung 7 sind also beispielsweise in ihrem unteren bereich miteinander über entsprechende Leitungen verbunden, so dass das Wasser nach dem Prinzip der kommunizierenden Röhren bestrebt ist, in Vorlagebehälter 6 und Aufreinigung 7 gleich hoch zu stehen.

Im Aufreinigungsbehälter 7 befinden sich in der Flüssigkeit vorteilhafterweise senkrecht eingebrachte Elektroden, beispielsweise aus Eisen, Aluminium oder Zink, welche mit einer Stromquelle derart verbunden sind, dass die Metallplatten in bestimmten Zeitintervallen jeweils umgepolt werden können.

Beispielsweise wird an die Elektroden der Elektroflotationsstufe eine konstante Gleichspannung angelegt, so dass sich der Stromfluss in Abhängigkeit von der lonenleitfähigkeit des zu reinigenden Wassers selbsttätig einstellt. Weiterhin kann die an die Elektroden angelegte Gleichspannung periodisch umgepolt werden, so dass eine Anlagerung von Hydroxiden an den Elektroden verhindert wird.

Der Reinigungsvorgang geschieht z. B. bei der Verwendung von Eisenelektroden durch Bildung von Fe²⁺ Ionen aus der Anode (anodische Auflösung). Diese bilden mit im Wasser befindlichen OH- Ionen Eisenhydroxid, welches eine hohe adsorptive Fähigkeit besitzt und Schmutzteilchen bindet, wobei sich Flocken bilden. Ebenfalls im Wasser befindlicher Wasserstoff lagert sich an diesen Flocken an, wodurch diese auftreiben und an der Oberfläche einen gelartigen Klärschaum bilden, welcher von Zeit zu Zeit durch Öffnen des Absaugventils 10 über die Klärschaumabsaugvorrichtung 9 und die Absaugleitung 11 in das Vakuum-System 29 abgesaugt wird.

Die Klärschaumabsaugung erfolgt hierbei über ein Ventil 10, welches die Grauwasseraufreinigungsstufen 7, 8 mit dem Vakuum-System 11, 29 verbindet, wobei dieses Ventil 10 automatisch angesteuert wird und die automatische Ansteuerung in bestimmten Zeitintervallen erfolgt, die entweder durch einen vorgegebenen Zeittakt gesteuert werden oder auf Basis einer Messung der Klärschaumschichtdicke erfolgt. Die Klärschaumschichtdicke kann beispielsweise durch eine optische Messung, beispielsweise in Form einer Lichtschranke oder in Form einer Ultraschallmessung, erfolgen.

Die pH-Werteinstellung bzw. die Bildung von H⁺ und OH- Ionen erfolgt durch die elektrolytische Wirkung der unter Spannung bzw. Strom stehenden Platten auf das Wasser. Hierbei wird H₂O in H⁺ und O²- aufgespalten, wobei sich die H⁺ Ionen sofort zu H₂ Molekülen verbinden und die O²⁻ Ionen mit freien H⁺ Ionen zu OH- Gruppen, welche sich dann mit den Fe²⁺ Ionen zu Fe(OH)₂ (Eisenhydroxid) verbinden.

Um zu vermeiden, dass sich auf den anodischen Platten eine Eisenhydroxidschicht anlagert, werden diese in bestimmten Zeitintervallen umgepolt.

Das so geklärte Wasser wird über einen Filter oder ein Filtersystem 8 vom Klärschaum getrennt und dann als geruchsloses Klarwasser über die Leitung 15 dem Klarwasservorratstank 16 zugeführt.

Um ein Überlaufen sowohl der Reinigungsstufe als auch des Klarwasservorratstanks zu verhindern, sind diese jeweils über Schwimmerventile 12, 25 und der Absaugleitung 11 mit dem Vakuum-System 29 verbunden.

Bei Erreichen eines Füllmaximums kann somit durch den auftreibenden Schwimmer das Schwimmerventil 12 geöffnet werden, wobei die überschüssige Flüssigkeit durch das Vakuum-System 11, 29 abgesaugt wird.

Wasserführende Anlagen in Luftfahrzeugen müssen drainierbar sein. Diese Funktion wird über die Drainage-Handventile 26, 27 gewährleistet.

Da sich bei der Elektroflotation freier Wasserstoff bildet und dieser nicht aus dem System in das Flugzeuginnere gelangen darf (Knallgasbildung), wird dieser über einen katalytischen Umsetzer 13 mit Luftsauerstoff zu Wasser umgesetzt, wobei der Luftsauerstoff über eine Belüftung 14 in das System gelangt.

Das Drainage-Handventil 26 verbindet den Zwischenbehälter 16 mit dem Vakuum-System 29 und ist an einem Auslaufstutzen des Zwischenbehälters 16 angebracht, der den tiefsten Punkt des Zwischenbehälters darstellt.

Der Überlauf 25 ist z.B. mit einem Schwimmerventil versehen, welches eine Verbindung zwischen Zwischenbehälter 16 und dem Vakuum-System 29 herstellen kann und welches bei Erreichen des Füllmaximums durch den auftreibenden Schwimmer geöffnet wird, wobei die überschüssige Flüssigkeit durch das Vakuum-System 29 abgesaugt wird.

Der Zwischenbehälter 16 ist in einer Ausführungsform unterhalb der WC-Schüssel 22 angebracht, wobei der Zwischenbehälter 16 mit der WC-Schüssel 22 eine Einheit bildet. Die Oberseite des Zwischenbehälters 16 ist der äußeren Form der WC-Schüssel 22 angepasst. In einem Ausführungsbeispiel der vorliegenden Erfindung bildet der Zwischenbehälter 16 mit der WC-Schüssel 22 eine untrennbare Einheit.

Die Drainage der Aufreinigungsstufe 7, 8 erfolgt über das Handventil 27, welches die Aufreinigungsstufe 7, 8 mit dem Vakuum-System 11, 29 verbindet und welches an einem Auslaufstutzen der Aufreinigungsstufe 7, 8 angebracht ist, der den tiefsten Punkt der Aufreinigungsstufe darstellt. ,

Die Spülung der WC-Schüssel erfolgt auf folgende Weise: Voraussetzung ist das Vorhandensein eines flugzeugüblichen sog. Vakuums in dem Vakuum-System, welches durch den Differenzdruck zwischen Kabinenluftdruck und Außendruck in den Abwasserrohren des Luftfahrzeuges dargestellt wird und im Gegensatz zu einem echten Vakuum lediglich eine Druckdifferenz von ca. 500 mbar beschreibt. Dieser Wert kann je nach Flugzeugtyp variieren. Bei Betrieb des Vakuum-Systems mit einem flugzeugüblichen Blower (Vakuum-Generator) kann die Druckdifferenz auf ca. 250 mbar absinken.

Über die Ansaugleitung 17 und das Rückschlagventil 18 gelangt das Klarwasser in die Wasserkammer einer Zylinderkombination 19. Diese besitzt wasserseitig einen Kolben, der über eine Stange mit einem Vakuumteil verbunden ist, welcher über ein Wegeventil 23 mittels eines zweiten Kolbens und durch Anlegen des Vakuums auf die eine oder andere Seite des Kolbens bewegt werden kann. Bei Anlegen des Vakuums auf der Stangenseite des Kolbens wird die Wasserkammer durch Ansaugen gefüllt. Durch Umschalten des Wegeventils 23 wird die stangenabgewandte Seite des Kolbens mit Vakuum beaufschlagt und der Kolben der Wasserkammer drückt das Wasser gegen ein federbelastetes Überdruckventil 20, welches bei Erreichen eines eingestellten Druckes schlagartig öffnet und das Wasser in den Sprühring 21 der WC-Schüssel 22 entlässt, welcher das Wasser für den Spülvorgang in der Schüssel verteilt. Die Wassermenge für den einzelnen Spülvorgang ist flugzeugüblich begrenzt. Die zur Verfügung stehende Wassermenge ergibt sich aus dem Durchmesser und dem Kolbenweg der Wasserkammer und ist somit bauartbedingt. Der Spüldruck ergibt sich aus dem Verhältnis der Kolbendurchmesser der Wasserkammer und der Vakuumkammer der Zylinderkombination 19 sowie dem Federdruck des Wegeventils 23, welches zum Beispiel ein Überdruckventil 23 ist. Dieser Federdruck ist zur Beeinflussung der Spülstärke einstellbar. Das Verhältnis der Kolbengrößen ist so gewählt, dass auch bei Blowerbetrieb am Boden eine ausreichende Spülfunktion gewährleistet ist.

Das Wegeventil wird elektromagnetisch angesteuert und schaltet das Vakuum aus dem Vakuum-System je nach auszuführender Funktion der Zylinderkombination 19 jeweils auf die entsprechende Kolbenseite.

Nach dem Spülvorgang werden die in der WC-Schüssel befindlichen Fäkalien zusammen mit dem Spülwasser über das Spülventil 28 in das Vakuum-System 29 angesaugt.

Mit anderen Worten besteht die Druckzylinderkombination 19 aus zwei gegeneinandergerichteten Zylindern, die in einem definierten Abstand zueinander auf einer Achse angeordnet sind und über ihre Kolbenstange starr miteinander verbundene Kolben aufweisen, so dass der Kolben des ersten Zylinders jeweils der Lage des Kolbens des zweiten Zylinders parallel folgt, wobei der erste Zylinder dem Ansaugen und Ausstoßen von Klarwasser dient und der zweite Zylinder über das Anlegen des Vakuums aus einem angeschlossenen Vakuum-System 29 auf der entsprechenden Kolbenseite den Kolben des ersten Zylinders bewegt.

Die Ansteuerung des zweiten Zylinders erfolgt mit Vakuum über ein Wegeventil 23, bei welchem wenigstens einer der Eingänge auf das Vakuum des Vakuum-Systems 29 geschaltet werden kann und ein zweiter Eingang gegen die Kabinenluft belüftet werden kann, so dass bei einem Umschalten des Wegeventils 23 diese Reihenfolge umgekehrt wird und dadurch die Eingänge des zweiten Zylinders der Zylinderkombinationen in umgekehrter Reihenfolge beschaltet werden, was eine Bewegung des Kolbens des zweiten Zylinders und des damit starr verbundenen Kolbens des ersten Zylinders zur Folge hat. Dieser Vorgang ist in beliebiger Zahl und in umgekehrter Folge jeweils wechselweise wiederholbar.

Gemäß einem Ausführungsbeispiel der vorliegenden Erfindung kann das Wegeventil 23 elektromagnetisch betätigt werden.

Beispielsweise kann das Wegeventil 23 als Vier/Zwei-Wegeventil ausgeführt sein. Der Kolben des zweiten Zylinders führt beispielsweise den gleichen Weg aus wie der Kolben des ersten Zylinders, jener weist jedoch einen größeren Durchmesser auf. Beispielsweise kann der erste Zylinder Oberflächen- und Dichtungsmaterialien aufweisen, welche beständig gegen Wasser sind. Entsprechend kann der zweite Zylinder Oberflächen- und Dichtungsmaterialien aufweisen, welche beständig gegen Luft sind.

Der Kolben wenigstens eines der beiden Zylinder kann eine Membran sein. Weiterhin kann ein Rückschlagventil 18 vorgesehen sein, welches den Rückfluss des Klarwassers aus dem ersten Zylinder verhindert. Ebenso ist gemäß eines Ausführungsbeispiels ein Überdruckventil 20 vorgesehen, gegen das das Klarwasser, welches im zweiten Arbeitsschritt des ersten Zylinders wieder aus diesem herausgepresst wird, gedrückt wird.

Das Überdruckventil 20 ist federbelastet und der Öffnungsdruck ist einstellbar, so dass das gegen das Überdruckventil 20 gedrückte Klarwasser bei Erreichen eines vorher eingestellten Drucks schlagartig öffnet und das Klarwasser stoßartig über den Sprühring 21 in die WC-Schüssel 22 eingesprüht wird, um durch die dadurch auftretende Impulswirkung des Klarwassers auf das Spülgut eine verbesserte Reinigungswirkung zu erzielen.

Die Entleerung der Bordküchen-Waschbecken erfolgt ebenfalls über das Vakuum-System. Hierzu wird das anfallende Wasser unter dem Waschbecken in einem Sammelbehälter gesammelt und über ein Schwimmerventil, ähnlich der oben beschriebenen Überlauffunktion der Reinigungsstufe oder des Klarwasservorratstanks, in das Vakuum-System entlassen.

Vorteilhafterweise kann am Boden des Sammelbehälters ein automatisches Spülventil, ähnlich dem Spülventil 28, an der WC-Schüssel installiert sein, so dass der Sammelbehälter in bestimmten Zeitintervallen vollständig entleert werden kann.

Ebenfalls vorteilhafterweise ist dieses Spülventil zu Drainagezwecken von Hand zu öffnen.

Die Oxidation der Wasserstoffmoleküle innerhalb des Gehäuses der Aufreinigungseinheit 7, 8 erfolgt beispielsweise durch einen Katalysator 13. Eine Wärmeabfuhr des Katalysators ist beispielsweise über Ventil 10 gewährleistet.

Der Spülvorgang der WC-Schüsseln 22 erfolgt jeweils manuell durch Betätigen eines elektrischen Auslösers.

Alle Abwässer des Luftfahrzeuges werden in den Abwassertanks gesammelt und nach der Landung entsorgt oder durch besondere Verfahren in ihrem Flüssigkeitsanteil reduziert,
wobei die so gewonnene Flüssigkeit soweit aufgereinigt wird, dass sie entweder im Flug an die Außenluft abgegeben werden kann oder der Wiederverwendung in einem Reformerprozess zur Wasserstoffgewinnung aus einem kohlenwasserstoffstoffhaltigen Energieträger (z. B. Kerosin) zugeführt werden kann.

Fig. 2 zeigt eine schematische Querschnittsdarstellung eines Flugzeugs mit einem Grauwasser-Nutzungssystem gemäß eines Ausführungsbeispiels der vorliegenden Erfindung. Wie bereits in Fig. 1 dargelegt, umfasst das Grauwasser-Nutzungssystem eine Grauwasseraufreinigungseinrichtung 31, einen Abwassersammeltank 36, ein Vakuum-System 29 und einen Vakuum-Generator 37. Weiterhin ist ein Frischwassertank 35 vorgesehen. Alternativ hierzu kann zusätzliches Frischwasser aus einem Brennstoffzellensystem geliefert werden (nicht gezeigt in Fig. 2). Die Abwässer aus den Bordküchen 33 werden über das Vakuum-System 29 in den Abwassersammeltank 36 geleitet. Grauwasser aus den Handwaschbecken 3 wird zu geruchlosem Klarwasser aufgereinigt und zur Toilettenspülung der Toiletten 22 verwendet. Frachtraumdrainage erfolgt über in den Rumpf eingelassene Drainageventile oder alternativ über Absaugung in den Abwassersammeltank 36. Bezugsziffer 34 bezeichnet eine Frischwasserleitung.

Die Erfindung beschränkt sich in ihrer Ausführung nicht auf die in den Figuren dargestellten bevorzugten Ausführungsformen. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Grauwasser-Nutzungssystem für ein Luftfahrzeug, das Grauwasser-Nutzungssystem umfassend:
eine Grauwasseraufreinigungseinrichtung (31);
einen Abwassersammeltank (36);
ein Vakuum-System (29);
wobei die Grauwasseraufreinigungseinrichtung (31) eine Elektroflotationsstufe (7) oder eine Filtrationsstufe (8) umfasst;
wobei die Grauwasseraufreinigungseinrichtung (31) zur Aufreinigung von Grauwasser zu erstem Klarwasser ausgeführt ist, welches daraufhin zur Spülung einer Toilette (22) verwendbar ist;
wobei das Vakuum-System (29) zum Sammeln von Abwasser in dem Abwassersammeltank (36) ausgeführt ist;
wobei das Abwasser erstes Spülwasser der Toilette (22) oder zweites Spülwasser aus einem Küchenbereich (33) enthält;
wobei das Grauwasser drittes Spülwasser aus einem Waschbecken (3) enthält;
wobei die Elektroflotationsstufe (7) zur Reinigung des Grauwassers von flotierbaren Wasserinhaltsstoffen ausgeführt ist;
**dadurch gekennzeichnet**, das die Elektroflotationsstufe (7) Oxidationsmmittel umfasst, durch welche freie Wasserstoffmoleküle innerhalb der Grauwasseraufreinigungseinrichtung (31) zu Wasser oxidiert werden; und
eine Zwangsbelüftungsvorrichtung (14) der Grauwasseraufreinigungseinrichtung (31) vorgesehen ist, so dass freiwerdender Wasserstoff ein Gehäuse der Grauwasseraufreinigungseinrichtung (31) nicht verlassen kann.

2. Grauwasser-Nutzungssystem nach Anspruch 1,
wobei die Grauwasseraufreinigungseinrichtung (31) mit dem Waschbecken (3) und der Toilette (22) derart verbunden ist, dass das dritte Spülwasser aus dem Waschbecken (3) in der Grauwasseraufreinigungseinrichtung (31) zu zweitem Klarwasser aufreinigbar ist und daraufhin der Toilette (22) zuführbar ist.

3. Grauwasser-Nutzungssystem nach einem der vorhergehenden Ansprüche,
wobei die Grauwasseraufreinigungseinrichtung (31) eine Filtrationsstufe (8) umfasst; wobei die Filtrationsstufe (8) zur Filtrierung des Grauwassers ausgeführt ist.

4. Anordnung nach Anspruch 1, wobei ein erster Sammelbehälter (32) vorgesehen ist, in welchen das zweite Spülwasser aus dem Küchenbereich (33) auffangbar ist und durch eine Überlaufvorrichtung mit einem Schwimmerventil oder über ein Absaugventil am Boden des ersten Sammelbehälters (32) in das Vakuum-System (29) entlassbar ist.

5. Grauwasser-Nutzungssystem nach einem der vorhergehenden Ansprüche, wobei eine separate Drainagevorrichtung (38) vorgesehen ist zur Drainage eines Frachtraums des Luftfahrzeuges, wobei die Drainagevorrichtung (38) aus in den Rumpf eingelassenen Drainageventilen besteht oder über einen zweiten Sammelbehälter (39) an das Vakuum-System (29) angeschlossen ist.

6. Grauwasser-Nutzungssystem nach einem der vorhergehenden Ansprüche, wobei eine Klärschaumabsaugvorrichtung (9) oder ein erster Überlauf (11, 12) vorgesehen ist;
wobei die Klärschaumabsaugvorrichtung (9) zur Absaugung eines Klärschaums aus der Aufreinigungsstufe (7, 8) über das Vakuum-System (11, 29) ausgeführt ist; und
wobei der erste Überlauf (11, 12) an der Grauwasseraufreinigungseinrichtung (31) angebracht ist.

7. Grauwasser-Nutzungssystem nach einem der vorhergehenden Ansprüche,
wobei das erste oder zweite Klarwasser in einem Zwischenbehälter (16) sammelbar ist; und
wobei der Zwischenbehälter (16) mit einem zweiten Überlauf (25) versehen ist.

8. Grauwasser-Nutzungssystem nach einem der vorhergehenden Ansprüche,
wobei eine erste Drainagevorrichtung (27) oder eine zweite Drainagevorrichtung (26) vorgesehen ist;
wobei die Grauwasser-Aufreinigungseinrichtung (31) mit der ersten Drainagevorrichtung (27) drainierbar ist; und
wobei der Zwischenbehälter (16) mit der zweiten Drainagevorrichtung (26) drainierbar ist.

9. Grauwasser-Nutzungssystem nach Anspruch 8 oder 9,
wobei eine Druckzylinderkombination (19) und ein Sprühring (21) vorgesehen sind;
wobei das Klarwasser aus dem Zwischenbehälter (16) mit Hilfe der Druckzylinderkombination (19) ansaugbar ist; und
wobei das Klarwasser daraufhin über den Sprühring (21) in die Toilette (22) abgebbar ist.

10. Grauwasser-Nutzungssystem nach einem der vorhergehenden Ansprüche, weiterhin umfassend eine elektronische Steuerung (28);
wobei die elektronische Steuerung (28) zur automatischen Steuerung des Grauwasser-Nutzungssystems ausgeführt ist; und
wobei die elektronische Steuerung (28) redundant ausgeführt ist, so dass bei Ausfall oder Fehlfunktion eines ersten Teils der elektronischen Steuerung (28) ein zweiter Teil der elektronischen Steuerung (28) die Funktion des ersten Teils übernehmen kann.

11. Grauwasser-Nutzungssystem nach einem der vorhergehenden Ansprüche, weiterhin umfassend eine Sensorik;
wobei bei einem Wassermangel im Zwischenbehälter (16) der Wassermangel über die Sensorik detektierbar ist; und
wobei nach Detektion des Wassermangels bei einem Waschvorgang ein Wasserhahn (2) des Waschbeckens (3) solange geöffnet bleibt, bis dieser Wassermangel behoben ist.

12. Grauwasser-Nutzungssystem nach einem der Ansprüche 3 bis 11, weiterhin umfassend eine umpolbare Gleichspannungsquelle, wobei eine an Elektroden der Elektroflotationsstufe (7) angelegte und von der Gleichspannungsquelle bereitgestellte Gleichspannung periodisch umgepolt wird, so dass eine Anlagerung von Hydroxiden an den Elektroden verhindert wird.

13. Luftfahrzeug, umfassend ein Grauwasser-Nutzungssystem nach einem der Ansprüche 1 bis 12.

14. Verwendung eines Grauwasser-Nutzungssystems nach einem der Ansprüche 1 bis 12 in einem Luftfahrzeug.

## Claims

1. A grey-water utilisation system for an aircraft, with the grey-water utilisation system comprising:
a grey-water treatment device (31);
a waste-water collection tank (36);
a vacuum system (29);
wherein the grey-water treatment device (31) includes an electroflotation stage (7) or a filtration stage (8);
wherein the grey-water treatment device (31) is designed to treat grey water so that it becomes first clear water, which subsequently can be used for flushing a toilet (22);
wherein the vacuum system (29) is designed to collect waste water in the waste-water collection tank (36);
wherein the waste water comprises first flush water from the toilet (22) or second rinse water from a galley region (33);
wherein the grey water comprises third rinse water from a wash basin (3);
wherein an electroflotation stage (7) designed to clean from the grey water any floatable materials contained in the water, **characterized in that**
the electroflotation stage (7) comprises oxidation means through which free hydrogen
molecules are oxidised within the grey-water treatment device (31) so that water is produced;
and
a forced aeration device (14) on the grey-water treatment device (31) is provided, so that released hydrogen cannot leave a housing of the grey-water treatment device (31).

2. The grey-water utilisation system of claim 1,
wherein the grey-water treatment device (31) is connected to the wash basin (3) and the toilet (22) such that the third rinse water from the wash basin (3) can be treated in the grey-water treatment device (31) so that it turns into second clear water and can subsequently be fed to the toilet (22).

3. The grey-water utilisation system of one of the preceding claims,
wherein the grey-water treatment device (31) further comprising a filtration stage (8);
wherein the filtration stage (8) is designed to filter the grey water.

4. An arrangement of claim 1,
wherein a first collecting basin (32) is provided, in which the second rinse water from the galley region (33) is collectable and is releasable to the vacuum system (29) by way of an overflow device with a float valve or by way of a suction valve on the bottom of the first collecting basin (32).

5. The grey-water utilisation system of one of the preceding claims,
wherein a separate drainage device (38) for draining a freight compartment of the aircraft is provided, wherein the drainage device (38) comprises drainage valves embedded in the fuselage, or is connected to the vacuum system (29) by way of a second collecting basin (39).

6. The grey-water utilisation system of one of the preceding claims,
wherein a clarifier-foam suction device (9) or a first overflow (11, 12) is provided;
wherein the clarifier-foam suction device (9) is designed to remove, by suction, a clarifier foam from the treatment stage (7, 8) by way of the vacuum system (11, 29); and
wherein the first overflow (11, 12) is installed on the grey-water treatment device (31).

7. The grey-water utilisation system of one of the preceding claims,
wherein the first or second clear water is collectable in an intermediate container (16); and
wherein the intermediate container (16) comprises a second overflow (25).

8. The grey-water utilisation system of one of the preceding claims,
wherein a first drainage device (27) or a second drainage device (26) is provided;
wherein the grey-water treatment device (31) can be drained using the first drainage device (27); and
wherein the intermediate container (16) can be drained using the second drainage device (26).

9. The grey-water utilisation system of claim 8 or 9,
wherein a pressure cylinder combination (19) and a spray ring (21) are provided;
wherein clear water can be sucked from the intermediate container (16) by means of the pressure cylinder combination (19); and
wherein the clear water can subsequently be fed into the toilet (22) by way of the spray ring (21).

10. The grey-water utilisation system of one of the preceding claims,
further comprising an electronic control device (28);
wherein the electronic control device (28) is designed to automatically control the grey-water utilisation system; and
wherein the electronic control device (28) is redundant so that in the case of failure or malfunction of a first part of the electronic control device (28), a second part of the electronic control device (28) can take over the function of the first part.

11. The grey-water utilisation system of one of the preceding claims,
further comprising a sensor arrangement;
wherein in the case of a water shortage in the intermediate container (16) the water shortage can be detected by way of the sensor arrangement; and
wherein after detection of the water shortage during a washing procedure a water cock (2) of the wash basin (3) remains open until this water shortage has been remedied.

12. The grey-water utilisation system of one of the claims 3 through 11,
further comprising a direct voltage source whose polarity can be reversed,
wherein a polarity of the direct voltage, provided by the direct voltage source, which direct voltage is applied to electrodes of the electroflotation stage (7), is periodically reversed so as to prevent hydroxides from being deposited on the electrodes.

13. Aircraft, including a grey-water utilisation system of one of the claims 1 through 12.

14. Use of a grey-water utilisation system of one of the claims 1 through 12 in an aircraft.

## Revendications

1. Système de récupération d'eaux grises pour un aéronef, le système de récupération comprenant :
un dispositif de traitement d'eaux grises (31) ;
un réservoir collecteur d'eaux usées (36) ;
un système à vide (29) ;
système de récupération d'eaux grises dans lequel :
le dispositif de traitement d'eaux grises (31) comprend un étage de flottation électrique (7) ou un étage de filtration (8) ;
le dispositif de traitement d'eaux grises (31) est réalisé pour traiter les eaux grises en une première eau claire, utilisable ensuite pour la vidange de toilettes (22) ;
le système à vide (29) est réalisé pour la collecte d'eaux usées dans le réservoir collecteur d'eaux usées (36) ;
les eaux usées renferment une première eau de vidange des toilettes (22) ou une deuxième eau de vidange d'une zone de cuisine (33) ;
les eaux grises renferment une troisième eau de vidange d'un lavabo (3) ;
l'étage de flottation électrique (7) est réalisé pour épurer les eaux grises de substances flottables ;
**caractérisé en ce que**
l'étage de flottation électrique (7) comprend des oxydants, par lesquels des molécules d'hydrogène libres sont oxydées en eau à l'intérieur du dispositif de traitement d'eaux grises (31) ; et
il est prévu un dispositif de ventilation forcée (14) du dispositif de traitement d'eaux grises (31), de sorte que de l'hydrogène dégagé ne peut pas sortir d'un carter du dispositif de traitement d'eaux grises (31).

2. Système de récupération d'eaux grises suivant la revendication 1, dans lequel le dispositif de traitement d'eaux grises (31) est raccordé au lavabo (3) et aux toilettes (22) de telle sorte que la troisième eau de vidange du lavabo (3) peut être traitée en une seconde eau claire dans le dispositif de traitement d'eaux grises (31) et être ensuite envoyée dans les toilettes (22).

3. Système de récupération d'eaux grises suivant l'une des revendications précédentes, dans lequel le dispositif de traitement d'eaux grises (31) comprend un étage de filtration (8) ; l'étage de filtration (8) étant réalisé pour filtrer les eaux grises.

4. Agencement suivant la revendication 1, dans lequel il est prévu un premier récipient collecteur (32), dans lequel peut être recueillie la deuxième eau de vidange de la zone de cuisine (33) et s'échapper dans le système à vide (29) au travers d'un système de trop-plein muni d'un robinet à flotteur ou par l'intermédiaire d'une soupape d'aspiration sur le fond du premier récipient collecteur (32).

5. Système de récupération d'eaux grises suivant l'une des revendications précédentes, dans lequel il est prévu un dispositif de drainage séparé (38) pour le drainage d'une soute à fret de l'aéronef, le dispositif de drainage (38) étant constitué de soupapes de drainage incorporées dans le fuselage ou étant raccordé au système à vide (29) par l'intermédiaire d'un second récipient collecteur (39).

6. Système de récupération d'eaux grises suivant l'une des revendications précédentes, dans lequel il est prévu un dispositif d'aspiration de mousse de clarification (9) ou un premier trop-plein (11, 12) ;
le dispositif d'aspiration de mousse de clarification (9) étant réalisé pour l'aspiration d'une mousse de clarification de l'étage de traitement (7, 8) par l'intermédiaire du système à vide (11, 29) ; et
le premier trop-plein (11, 12) étant monté sur le dispositif de traitement d'eaux grises (31).

7. Système de récupération d'eaux grises suivant l'une des revendications précédentes, dans lequel la première ou la seconde eau claire peut être collectée dans un réservoir intermédiaire (16) ; et le réservoir intermédiaire (16) est muni d'un second trop-plein (25).

8. Système de récupération d'eaux grises suivant l'une des revendications précédentes, dans lequel il est prévu un premier dispositif de drainage (27) ou un second dispositif de drainage (26) ;
le dispositif de traitement d'eaux grises (31) pouvant être drainé par le premier dispositif de drainage (27) ; et
le réservoir intermédiaire (16) pouvant être drainé par le second dispositif de drainage (26).

9. Système de récupération d'eaux grises suivant l'une des revendications 8 et 9, dans lequel sont prévus une combinaison de cylindres de pression (19) et un anneau de pulvérisation (21) ;
l'eau claire pouvant être aspirée du réservoir intermédiaire (16) à l'aide de la combinaison de cylindres de pression (19) ; et
l'eau claire pouvant être ensuite distribuée dans les toilettes (22) par l'intermédiaire de l'anneau de pulvérisation (21).

10. Système de récupération d'eaux grises suivant l'une des revendications précédentes, comprenant en outre une commande électronique (28) ;
la commande électronique (28) étant réalisée pour la commande automatique du système de récupération d'eaux grises ; et
la commande électronique (28) ayant une réalisation redondante de sorte que, en cas de défaillance ou d'erreur de fonction d'une première partie de la commande électronique (28), une seconde partie de la commande électronique (28) peut assumer la fonction de la première partie.

11. Système de récupération d'eaux grises suivant l'une des revendications précédentes, comprenant en outre une sensorique ; système de récupération dans lequel :
en cas de manque d'eau dans le réservoir intermédiaire (16), le manque d'eau est détectable par l'intermédiaire de la sensorique ; et
après la détection du manque d'eau lors d'une opération de lavage, un robinet d'eau (2) du lavabo (3) reste ouvert jusqu'à ce que ce manque d'eau soit supprimé.

12. Système de récupération d'eaux grises suivant l'une des revendications 3 à 11, comprenant en outre une source de tension continue de polarité inversable, une tension continue, appliquée aux électrodes de l'étage de flottation électrique (7) et fournie par la source de tension continue, étant inversée périodiquement de sorte qu'une fixation d'hydroxydes sur les électrodes est empêchée.

13. Aéronef, comprenant un système de récupération d'eaux grises suivant l'une des revendications 1 à 12.

14. Utilisation d'un système de récupération d'eaux grises suivant l'une des revendications 1 à 12 dans un aéronef.
